Europäisches Patentamt

European Patent Office

Office européen des brevets

(11) Publication number: **0 053 521**
**B1**

(12) **EUROPEAN PATENT SPECIFICATION**

(45) Date of publication of patent specification: **02.05.85**

(51) Int. Cl.⁴: **C 23 F 17/00,** B 05 D 3/10

(21) Application number: **81305693.4**

(22) Date of filing: **03.12.81**

(54) Improvements in metal components.

(30) Priority: **03.12.80 GB 8038743**
**22.07.81 GB 8122541**

(43) Date of publication of application:
**09.06.82 Bulletin 82/23**

(45) Publication of the grant of the patent:
**02.05.85 Bulletin 85/18**

(84) Designated Contracting States:
**BE DE FR IT NL**

(56) References cited:
**DE-A-2 853 542**
**FR-A-2 428 682**
**FR-A-2 451 404**
**GB-A-2 026 045**

(73) Proprietor: **LUCAS INDUSTRIES public limited company**
**Great King Street**
**Birmingham, B19 2XF (GB)**

(72) Inventor: **Powell, George Bertram**
**Yew Tree Cottage**
**Deri Abergavenny Gwent (GB)**
Inventor: **Garfield, Glen Edward**
**44 Pickwick Grove**
**Moseley Birmingham B13 9LN (GB)**

(74) Representative: **Spall, Christopher John et al**
**BARKER, BRETTELL & DUNCAN 138 Hagley Road**
**Edgbaston Birmingham B16 9PW (GB)**

Courier Press, Leamington Spa, England.

**Description**

This invention relates to improvements in metal components of the kind having a surface covered with a protective layer.

It is known to apply to exposed surfaces of metal components protective layers in the form of chromium plating. Such a process involves the use of poisonous chemicals and is expensive since, after plating, the protective layer must be polished and inspected for thickness, quality and the like. Also it is expensive to avoid the production of hard brittle nodules of chrome along with the desired smooth protective layer. Attempts to brush off such nodules can scratch the layer but if the nodules are left on, they can break off later, becoming embedded in any guide through which the component may be guided to slide. In addition prevention of rusting beneath the layer of plating cannot be guaranteed and rusting can occur as a result of the surface of the layer being scratched, for example during a finishing operation following plating.

It is known that paints can be applied to a metal surface, suitably steel, for example by spraying or dipping in order to provide the component with a protective layer. However it is also known that surface preparation of the metal is essential if the paint is to adhere to the steel with sufficient reliability. For components to be used in applications in which they are guided to slide through guides, with high bearing loads, for example in the case of a piston-rod guided to slide through a bushing in one end of a cylinder, improved adhesion is required. Such surface preparations as are known are not good enough to adhere to the surface of components of that kind and are therefore not usually provided with a protective layer of paint.

We are aware of GB—A—2026045 which discloses treating a ferrous material by gas soft nitriding to form a nitride layer preferably mainly epsilon phase, in order to improve the adhesion of a subsequently applied protective finish layer in the form of a layer of paint.

According to our invention a metal component of steel has a surface covered with a protective layer by the steps of nitrocarburising the steel to an extent sufficient to produce an epsilon layer on the surface of the steel, and then applying a protective finish layer on the epsilon layer, the protective finish layer comprising a base resin/binder comprising any one of acrylics, alkyds, maleic esters, epoxides, melamine formaldehydes, phenolics, polyvinyl butyrals, polyvinyl chlorides, polyamides, polyimides, polyurethanes, silicones, polyvinyl ethers and ureaformaldehydes, or the finish layer comprises a cured film of an acrylic/epoxide/amino resin system containing zinc chromate or zinc stearate or a wax.

An epsilon layer is very hard and since it is also porous, the porosity of the layer provides a means whereby the material constituting adheres to the metal with a reliability sufficient to satisfy most requirements. The porosity causes the material to be "keyed" to the surface sufficiently to resist peeling and other damage.

Preferably, after the formation of the epsilon layer, the steel is quenched in air before the formation of the protective finish layer.

The formation of the epsilon layer can be achieved by any convenient known process.

Our invention is particularly applicable to the manufacture of piston-rods for use in hydraulic dampers and shock-absorbers of the kind in which a piston working in a bore in a cylinder is carried by a piston-rod and the piston-rod itself is slidably guided through a bearing, suitably a seal or other sealing guide forming a closure, or a part of a closure, for one end of the cylinder. The rod may be guided through a seal of elastomeric material and at least the exposed portion of the rod, which projects from the cylinder, is covered with the protective finish layer as described above.

This process is cheap and is easy to carry out. The protective finish layer, besides protecting the rod against corrosion, also serves to reduce friction.

Our invention is particularly applicable to those components which exhibit, or are subjected to, a reciprocable motion in operation, for example to cylinders in which pistons work, and to the pistons themselves.

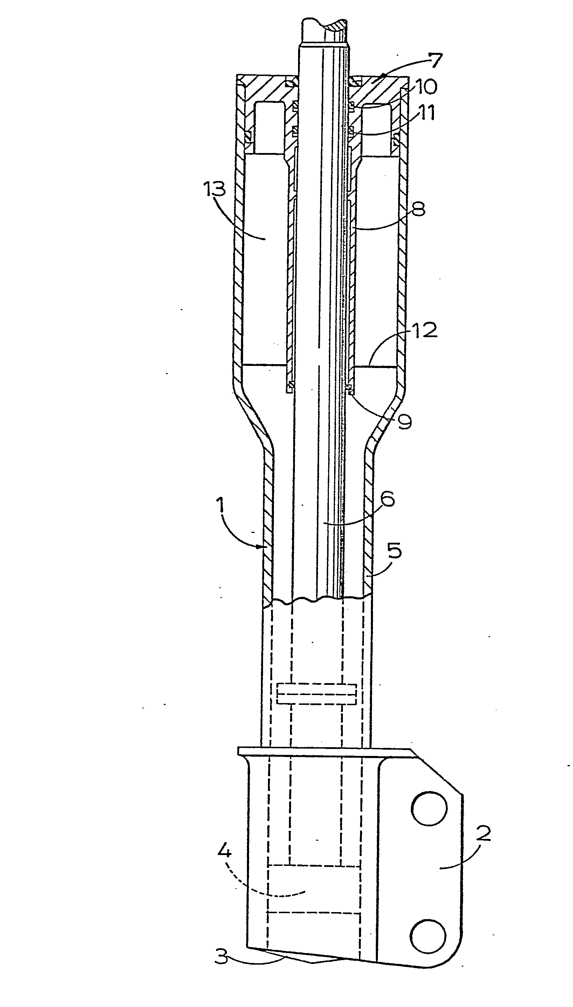

A longitudinal section through an hydraulic suspension damper strut or shock absorber for a vehicle is illustrated in the single Figure of the accompanying drawings of which the external surface of the piston rod is covered with a protective layer.

The suspension damper strut or shock absorber illustrated in the drawings is adapted for connection between sprung and unsprung parts of the vehicle, for example between the chassis or frame and an axle carrying a wheel. The strut comprises a cylinder 1 which is provided at its lower end with a bracket 2 by means of which the cylinder is connected to an axle of a vehicle. The cylinder 1 is also closed at that end by an end closure 3. A piston 4 adapted to work in the bore 5 of the cylinder 1 is carried by a piston-rod 6 manufactured from steel of the bar-type and the piston-rod 6 is itself slidably guided through a bearing 7 constituted by a closure for the other, upper, end of the cylinder 1. The closure 7 includes an axially extending skirt 8 which surrounds the rod 6, and a seal 9 of elastomeric material carried by the skirt adjacent to its inner end seals against the rod 6. Axially spaced seals 10 and 11, also of elastomeric material, are also provided in the closure 7 adjacent to its upper, outer, end, and with which the rod 6 also seals.

The cylinder 1 is filled with hydraulic fluid to a level, indicated by the line 12, above the seal 9, and the space 13 above the hydraulic fluid is filled with gas or air under pressure to act as a, or to augment any

2

other, suspension spring, and to accommodate the hydraulic fluid displaced by the volume of the piston-rod 6 as it enters, and is withdrawn from, the cylinder 1.

The upper end of the piston-rod is provided with a connection, suitably a bushed eye, for connection to the chassis or frame of the vehicle.

The piston 4 is provided with oppositely acting one-way valves or restrictors, not shown, through which hydraulic fluid can be displaced through the piston 4 in both directions in order to damp out oscillations between the sprung and unsprung parts.

At least the portion of the external surface of the piston-rod 6 which projects from the closure 7 when the strut is fully extended is provided with a protective layer. The protective layer is produced by the steps of nitrocarburising the rod 6 to produce an epsilon layer on the said external surface, quenching the rod 6 in air, and then spraying, dusting or dipping the rod 6 with or in a suitable material to provide a protective finish layer on the epsilon layer.

The materials to form the protective finish layer, heat curing or air drying synthetic or natural resins, are shown in Table 1. These may be used alone, or in appropriate combinations as solutions in organic solvents.

TABLE 1

Bases Resins/Binders

| | |
|---|---|
| 1. Acrylics | 8. Polyvinyl chlorides |
| 2. Alkyds | 9. Polyamides |
| 3. Maleic esters | 10. Polyimides |
| 4. Epoxides | 11. Polyurethanes |
| 5. Melamine formaldehydes | 12. Silicones |
| 6. Phenolics | 13. Polyvinyl ethers |
| 7. Polyvinyl butyrals | 14. Ureaformaldehydes |

Corrosion protection may be enhanced by the incorporation into the resin solution(s) of Table 1, materials listed in Table 2 below.

TABLE 2

Corrosion Inhibiting Additives

| | |
|---|---|
| 1. Zinc phosphate | 2. Zinc chromate |

The frictional properties of the cured films can be suitably modified by the use of the film friction modifiers listed in Table 3 below.

TABLE 3

Film Friction Modifiers

| | |
|---|---|
| 1. Silicone | 4. Molybdenum disulphide |
| 2. Waxes | 5. Graphite |
| 3. Polytetrafluoroethylenes | 6. Zinc stearate |

In a preferred embodiment, the protective finish layer is formed by application of a cured film of an acrylic/epoxide/amino resin system containing zinc chromate or zinc stearate or a wax. A silicone spray is then applied in order to reduce friction.

We have found that in practice the finish layer may not soak into the epsilon layer. Rather, in the case of a piston-rod described above, the finish layer is pushed into the epsilon layer by the action of the rod being pressed against the bearing in use. It may therefore be preferable to "roll" the finish layer into the epsilon layer on the rod during treatment.

**0 053 521**

Claims

1. A metal component of steel having a surface covered with a protective layer by the steps of nitrocarburising the steel to an extent sufficient to produce an epsilon layer on the surface of the steel, and then applying a protective finish layer on the epsilon layer characterised in that the protective finish layer comprises a base resin/binder comprising any one of acrylics, alkyds, maleic esters epoxides, melamine formaldehydes, phenolics, polyvinyl butyrals, polyvinyl chlorides, polyamides, polyimides, polyurethanes, silicones, polyvinyl ethers and ureaformaldehydes, or the finish layer comprises a cured film of an acrylic/epoxide/amino resin system containing zinc chromate or zinc stearate or a wax.

2. A metal component as claimed in Claim 1, characterised in that corrosion protection is enhanced by incorporation into the resin/binder of zinc phosphate or zinc chromate.

3. A metal component as claimed in Claim 1 or Claim 2, characterised in that the friction properties of the protective finish layer are modified by the addition of a film friction modifier comprising any one of a silicone, waxes, polytetrafluoroethylenes, molybdenum disulphide, graphite and zinc stearate.

4. A metal component as claimed in any preceding claim, in which a silicone spray is applied to the finish layer to reduce friction.

5. A metal component as claimed in any preceding claim, for use as a piston rod which carries a piston of an hydraulic suspension damper or shock absorber for a vehicle.

Patentansprüche

1. Metallteil aus Stahl, mit einer Oberfläche, die durch Nitro-Einsatzhärten des Stahls in einem zum Erzeugen einer Epsilon-Schicht auf der Stahloberfläche ausreichenden Ausmaß und anschließendes Auftragen einer schützenden Endschicht auf die Epsilon-Schicht mit einer Schutzschicht überzogen ist, dadurch gekennzeichnet, daß die schützende Endschicht einen Basisträger, der einen der Acryle, Alkyde, Maleinester, Epoxide, Melaminformaldehyde, Phenole, Polyvinylbutyrale, Polyvinylchloride, Polyamide, Polyimide, Polyurethane, Silikone, Polyvinylester und Harnstoff-Formaldehyde aufweist, oder daß die schützende Endschicht einen ausgehärteten Film aus einem Acryl/Epoxyd/Amino-Kunstharzsystem, das Zinkchromat oder Zinkstearat oder ein Wachs enthält, aufweist.

2. Metallteil nach Anspruch 1, dadurch gekennzeichnet, daß der Korrosionsschutz durch Einschluß von Zinkphosphat oder Zinkchromat in den Harzträger verstärkt ist.

3. Metallteil nach Anspruch 1 oder 2, dadurch gekennzeichnet, daß die Reibungseigenschaften der schützenden Endschicht durch Zugabe eines die Filmreibung modifizierenden Mittels, das ein Silicon, Wachse, Polytetrafluoräthylene, Molybdändisulfide, Graphit oder Zinkstearat ist, modifiziert sind.

4. Metallteil nach einem der vorhergehenden Ansprüche, dadurch gekennzeichnet, daß ein Siliconspray auf die Endschicht aufgetragen ist, um die Reibung zu verringern.

5. Verwendung eines Metallteiles nach einem der vorhergehenden Ansprüche als Kolbenstange, welche den Kolben eines hydraulischen Federbeines oder Stoßdämpfers für ein Fahrzeug trägt.

Revendications

1. Composant métallique d'un acier comportant une surface recouverte d'une couche protectrice par les stades opératoires d'une nitruration suffisante de l'acier pour produire une couche "epsilon" sur la surface de l'acier, puis de l'application d'une couche de finition protectrice sur la couche epsilon, la couche de finition protectrice comprenant une résine de base/liant qui inclut l'un quelconque des composés suivants: composés acryliques, résines alkydes, esters maléiques, époxydes, mélamine-formaldéhydes, matières phénoliques, butyrals polyvinyliques, chlorures de polyvinyle, polyamides, polyimides, polyuréthanes, silicones, ethers polyvinyliques et urée-formaldéhydes, ou bien la couche de finition comprend une pellicule durcie d'un système de résine acrylique/époxyde/amino contenant du chromate de zinc ou du stéarate de zinc ou une cire.

2. Composant métallique selon revendication 1, caractérisé en ce que la protection contre la corrosion est augmentée par incorporation, dans la résine/liant, de phosphate ou chromate de zinc.

3. Composant métallique selon revendication 1 ou 2, caractérisé en ce que les propriétés de friction de la couche de finition protectrice sont modifiées par addition d'un modificateur de friction de la pellicule comprenant l'une quelconque des composés suivants: un silicone, des cires, des polytétrafluoroéthylènes, du disulfure de molybdène, du graphite et du stéarate de zinc.

4. Composant métallique selon l'une quelconque des revendications précédentes, dans lequel une pulvérisation de silicone est appliquée à la couche de finition pour diminuer la friction.

5. Composant métallique selon l'une quelconque des revendications précédentes, pour être utilisé comme tige de piston, portant le piston d'un amortisseur de suspension hydraulique ou d'un absorbeur de chocs pour un véhicule.